(19) Europäisches Patentamt
European Patent Office
Office européen des brevets

(11) **EP 1 529 080 B1**

(12) **FASCICULE DE BREVET EUROPEEN**

(45) Date de publication et mention
de la délivrance du brevet:
**26.09.2007 Bulletin 2007/39**

(21) Numéro de dépôt: **03758227.7**

(22) Date de dépôt: **11.08.2003**

(51) Int Cl.:
*C08L 95/00* *(2006.01)*

(86) Numéro de dépôt international:
**PCT/FR2003/002506**

(87) Numéro de publication internationale:
**WO 2004/016565 (26.02.2004 Gazette 2004/09)**

(54) **PROCEDE ET DISPOSITIF POUR LA FABRICATION D UN MELANGE DE CO    NSTRUCTION COMPRENANT UN LIANT BITUMINEUX**

VERFAHREN UND VORRICHTUNG FÜR DIE HERSTELLUNG EINER EIN BITUMINÖSES BINDEMITTEL ENTHALTENDEN BAUMISCHUNG

METHOD AND DEVICE FOR PRODUCING A MORTAR CONTAINING BITUMINOUS BINDER

(84) Etats contractants désignés:
**AT BE BG CH CY CZ DE DK EE ES FI FR GB GR HU IE IT LI LU MC NL PT RO SE SI SK TR**

(30) Priorité: **13.08.2002 US 217147**

(43) Date de publication de la demande:
**11.05.2005 Bulletin 2005/19**

(73) Titulaires:
• **Mitteldeutsche Hartstein-Industrie AG**
**63456 Hanau (DE)**
• **Eurovia GmbH**
**46240 Bottrop (DE)**
• **Eurovia**
**92500 Rueil-Malmaison (FR)**

(72) Inventeurs:
• **BARTHEL, Walter**
**63505 Langenselbold (DE)**
• **VON DEVIVERE, Max**
**NL-3818 ED Amersfoort (NL)**
• **MARCHAND, Jean-Pierre**
**F-78360 Montesson (FR)**

(74) Mandataire: **Warcoin, Jacques et al**
**Cabinet Régimbeau**
**20, rue de Chazelles**
**75847 Paris cedex 17 (FR)**

(56) Documents cités:
**EP-A- 1 170 421        DE-A- 4 323 256**
**US-A- 4 420 419**

• **DATABASE WPI Week 198548 Derwent Publications Ltd., London, GB; AN 1985-301260 XP002269611 & SU 1 156 726 A (LEBEDENKO YU P), 13 mai 1985 (1985-05-13)**

**Description**

La présente invention concerne un procédé de préparation d'un mélange de construction comprenant un liant bitumineux, la température de mélange des granulats et du liant bitumineux étant abaissée. L'invention concerne également un mélange de construction comprenant un liant bitumineux susceptible d'être obtenu par le procédé selon la présente invention ainsi qu'un dispositif pour la fabrication d'un mélange de construction comprenant un liant bitumineux.

Le bitume est un mélange d'hydrocarbures à grande masse moléculaire obtenu par raffinage du pétrole. Le bitume est une masse de couleur foncée, semi-solide à visqueuse, collant et ayant des propriétés hydrophobes.

En raison de son comportement viscoélastique, le bitume peut être mis en oeuvre à haute température. Dans la plupart des applications, par exemple pour préparer un enrobé bitumineux pour la construction routière, ou encore pour des bandes bitumineuses pour les toits et les isolations, le bitume doit être livré par la raffinerie à l'état fondu et être maintenu dans des réservoirs isolés.

Au sens de la présente invention, on entend par liant bitumineux les bitumes et/ou toutes les compositions à base de bitumes. Par liant bitumineux, on entend ainsi au sens de la présente invention aussi bien un liant à base de bitume pur que des liants contenant tout type d'additifs habituels, notamment des polymères.

Avec des granulats minéraux et/ou synthétiques, il est possible de fabriquer des mélanges de matériaux de construction pouvant être mis en oeuvre avec un liant bitumineux chaud, tels que des enrobés bitumineux ou des bétons bitumineux.

Historiquement, les enrobés bitumineux étaient fabriqués dans des postes continus, des tambours sécheurs enrobeurs, et les bétons bitumineux dans des postes discontinus. On associe souvent l'expression « béton bitumineux » à des mélanges bitumineux pour des couches de roulement et l'expression « enrobés bitumineux » à des mélanges bitumineux pour d'autres couches de chaussées.

Au sens de la présente invention, l'expression « enrobé(s) bitumineux » désignera les enrobés bitumineux, encore parfois appelés enrobés hydrocarbonés, ainsi que les bétons bitumineux.

Classiquement, pour fabriquer un enrobé bitumineux, on ajoute à une tonne de granulats secs 4 à 7 % en poids de liant bitumineux. Pour la fabrication d'enrobés bitumineux à chaud, des granulats minéraux sont d'abord séchés dans un tambour puis, le cas échéant, criblés afin d'être entreposés dans des compartiments de stockage, les granulats sont mélangés dans un malaxeur selon la formule à réaliser, la température des granulats étant comprise entre 150°C et 200°C. Puis, le bitume est ajouté par injection ou pulvérisation pour assurer l'enrobage des granulats. La température du bitume varie normalement entre 140°C et 190°C en fonction de la viscosité désirée. De plus, le mélange est additionné de charges dont l'introduction peut avoir lieu avant, pendant et/ou après l'injection du bitume.

Le temps de séjour global des produits de base dans le malaxeur est de 40 à 60 secondes, voire 120 secondes. A côté de la fabrication discontinue, c'est-à-dire d'une fabrication en gâchées, des enrobés bitumineux, on connaît également un procédé de fabrication en continu dont les opérations sont sensiblement les mêmes, excepté le fait que l'opération d'enrobage ne se fait plus à l'aide d'un malaxeur.

L'opération de séchages des granulats est coûteuse énergétiquement et génère des émissions de fumées et de poussières dans l'atmosphère.

Les températures de l'étape de malaxage varient, selon le type de liant bitumineux, entre 140 et 190°C, les températures d'enrobage peuvent être plus élevées dans le cas de techniques particulières telles que celles des enrobés coulés à chaud dans laquelle la température d'enrobage est comprise entre 200 et 250°C. Des températures élevées de malaxage représentent une forte dépense d'énergie et simultanément une pollution environnementale due aux effluents gazeux indésirables.

Des plages de température de malaxage élevées induisent, pour certains types de bitumes, des décompositions qui dégagent des fumées bleues. Ainsi, des températures de malaxages qui sont abaissées présentent des avantages économiques et écologiques, qui se poursuivent avantageusement lors de la mise en oeuvre.

A froid, le bitume est dur et, quand la température augmente, il passe d'une manière continue par tous les états d'agrégation, en passant par l'état visqueux, pour arriver à l'état fluide. Ce changement d'état est réversible et forme la base de ses possibilités de mise en oeuvre, telles que le pompage, le malaxage et la projection. Après le refroidissement, les matériaux de construction mis en place et liés par du bitume peuvent être immédiatement mis en charge. Le comportement viscoélastique du bitume forme la base des propriétés à l'emploi du matériau de construction qui est lié par ce bitume. La résistance à la déformation est elle aussi favorisée, et il en est de même de la résistance à long terme. Le comportement élastique et plastique du bitume doit donc pouvoir être transposé au produit final, par exemple au revêtement routier. L'aptitude à la mise en oeuvre de l'enrobé et l'obtention du taux de compostage exigé pour les surfaces destinées à la circulation sont fonction de l'enrobé bitumineux à tel point que des températures d'enrobage plus élevées sont choisis pour assurer la fabrication d'un produit final optimalisé.

Les types de bitume particulièrement durs exigent des températures de malaxage élevées, pour garantir, à l'état fluide, l'enrobage et donc l'agglutination des particules minérales et/ou synthétiques du granulat. L'introduction des granulats fins, par exemple des farines, dans le bitume conduit à un effet de rigidification, et ainsi à une augmentation de la viscosité.

Le brevet européen EP 0 048 792 B1 décrit un procédé de fabrication d'un enrobé bitumineux coulé à chaud qui contient 0,2 à 5 % en poids d'une zéolithe ou d'un mélange de zéolithe synthétique sous forme pulvérulente pour une meilleure tenue à l'orniérage.

Les particules de la poudre de zéolithe ont un diamètre moyen d'environ 10 $\mu$m.

La demande allemande DE 43 23 256 A1 décrit l'utilisation de zéolithe(s), sous forme de poudres, pour abaisser la température de malaxage et la viscosité du bitume. La zéolithe, qui est de préférence une zéolithe de type A, a une teneur en eau de 5 à 30 % en poids. Les particules de la poudre de zéolithe ont un diamètre moyen d'environ 10 $\mu$m.

L'utilisation de la zéolithe pulvérulente, telle que décrite dans les documents de l'art antérieur, entraîne des problèmes techniques d'exploitation, notamment des problèmes de coulabilité et de sécurité dus à la manipulation de poudres, notamment lors de l'introduction de la zéolithe pulvérulente dans le malaxeur (enrobeur). C'est, entre autres, une raison pour laquelle les procédés décrits dans les demandes EP 0 048 792 et DE 4323256 n'ont jamais été exploités.

De manière surprenante, la Demanderesse a découvert que l'introduction d'un additif, ayant un haut pouvoir de désorption avec la température, sous forme de granulés, avant et/ou pendant l'injection du liant bitumineux permet de répondre au double problème technique complexe d'amélioration de la maniabilité et de la fluidité de l'additif avant et pendant l'ajout dans le malaxeur (enrobeur) tout en permettant à cet additif, une fois qu'il a été ajouté, de développer in situ plus rapidement des caractéristiques techniques améliorées.

L'ajout de l'additif sous forme de granulés permet de réduire la température d'enrobage. Cette réduction de la température d'enrobage permet de réduire la consommation énergétique, l'émission des fumées et des poussières dans l'atmosphère et la production de gaz à effet de serre, tels que le dioxyde de carbone.

Dans le cadre de la présente invention, le terme « granulat(s) » désignera les granulats minéraux et/ou synthétiques qui sont classiquement introduits dans les liants bitumineux pour fabriquer des mélanges de matériaux de construction.

Dans le cadre de la présente invention, le terme « granulé(s) » désignera les granulés d'additif ayant un haut pouvoir de désorption avec la température qui sont introduits dans le malaxeur (enrobeur) avant et/ou pendant l'injection du liant bitumineux.

La présente invention concerne donc un procédé de préparation d'un mélange de construction comprenant un liant bitumineux, notamment d'un béton bitumineux ou d'enrobés bitumineux, caractérisé en ce qu'il comprend les étapes suivantes :

a) séchage, dans un dispositif malaxeur (enrobeur), de granulats à une température $T_1$ comprise entre 110 et 160 °C ; puis

b) enrobage desdits granulats, qui sont à la température $T_1$, par injection dans le dispositif malaxeur (enrobeur) d'un liant bitumineux chauffé à une température $T_2$ comprise entre 140 et 190 °C ;

et en ce que, avant et/ou pendant l'injection du liant bitumineux, on introduit dans le dispositif malaxeur (enrobeur) un additif ayant un haut pouvoir de désorption avec la température sous forme de granulés, lesdits granulés comprenant de fines particules dudit additif agrégées au moyen d'un liant, lesdites fines particules ayant un diamètre moyen compris entre 2 $\mu$m et 4 $\mu$m.

Au sens de la présente invention, on entend par les termes « diamètre moyen » la moyenne arithmétique des diamètres individuels des particules mesurés au granulomètre laser.

Dans un mode de réalisation préféré de l'invention, la température $T_2$ de chauffage du liant bitumineux est supérieure, avantageusement de 30°C environ, à la température $T_1$ de séchage des granulats.

Avantageusement, le liant est chauffé à sa température d'enrobage classique et les granulats sont sèches à une température inférieure de 30°C environ à ladite température d'enrobage classique. Notamment, la température de séchage des granulats est de 130°C et la température de chauffage de liant bitumineux est de 160°C.

Lors de l'enrobage des granulats par le liant bitumineux, la température du liant bitumineux a tendance à se rapprocher de celle des granulats compte tenu des pourcentages en présence. En effet, un mélange de construction comprenant un liant bitumineux, est par exemple constitué d'environ 94 % de granulats et 6 % du bitume. Si on suppose que les granulats sont chauffés à une température de 130°C, que le liant bitumineux est chauffé à 160°C, que la chaleur massique des granulats est de 0,2 th/t et celle du liant bitumineux est de 0,5 th/t, que les proportions du granulat par rapport au bitume sont respectivement de 94% et de 6%, la température du mélange est alors de 134°C. Ainsi, si on diminue la température de séchage des granulats, la température d'enrobage est moins importante, la température du liant bitumineux décroît et sa viscosité augmente. L'enrobage devient donc plus difficile. L'introduction de l'additif a pour objectif de compenser cet inconvénient. L'additif, sous forme de granulés, dégage, sous l'effet de la température des granulats, l'eau qu'il contient sous forme solide et diminue ainsi artificiellement la viscosité du liant bitumineux et améliore donc la qualité de l'enrobage.

Dans le cadre de la présente invention, on entend par l'expression « additif ayant un haut pouvoir de désorption avec la température », tout additif capable de libérer sous l'action de la chaleur, c'est-à-dire à une température supérieure à 110 °C, des molécules d'eau qui se trouvent entre les couches ou les interstices de son réseau cristallin. Classiquement, on appelle cette eau emprisonnée physiquement une « eau zéolithique ».

Avantageusement, on utilise un additif dont la teneur en eau varie de 5 à 30% en poids, notamment de 15 à 25 % en poids par rapport au poids total de l'additif.

Les granulés comprennent de fines particules dudit additif agrégées au moyen d'un liant.

Ces fines particules dudit additif peuvent notamment être obtenues par granulation par voie humide. Ensuite, elles sont agrégées au moyen d'un liant ou d'une colle de façon à créer des granulés de diamètre moyen compris entre 0,2 mm et 1 mm.

Ladite colle peut notamment être un dérivé de cellulose. Une colle particulièrement appropriée pour agréger les fines particules dudit additif est la carboxyméthylcellulose (CMC).

D'un point de vue pratique, il est préférable de manipuler l'additif sous forme de granulés plutôt que de manipuler le même additif sous forme pulvérulente. En effet, les granulés, par rapport aux poudres, présentent notamment les avantages suivants :

- meilleur maniement (stockage, transport, dosage) ;
- formation de poussière restreinte ;
- meilleure fluidité ;
- pas de cuisson.

De manière surprenante, la Demanderesse a également découvert que l'introduction de l'additif sous forme de granulés permet une distribution améliorée et plus rapide de l'additif dans le malaxeur (enrobeur) avant et/ou pendant l'injection du liant. L'étape d'enrobage ne durant que 40 secondes environ, jusqu'à 120 secondes maximum, il est important que l'additif puisse libérer une quantité maximale de son eau zéolithique durant cette courte période. Une fois que les granulés d'additifs sont introduits dans le malaxeur (enrobeur), les fines particules dudit additif ne sont plus liées entre elles. On a alors dans le malaxeur (enrobeur) des fines particules d'additif, qui ont un diamètre moyen compris entre 2 et 4 $\mu$m. Il serait difficile d'introduire ces fines particules telles quelles dans le malaxeur (enrobeur) en raison des nombreux problèmes techniques liés à la manipulation de poudres.

Dans un mode de réalisation avantageux de l'invention, les fines particules dudit additif ont une surface spécifique comprise entre 8 000 et 26 000 cm$^2$/g, avantageusement d'au moins 15 000 cm$^2$/g, mesurée au granulomètre laser.

Lors d'essais au laboratoire, la Demanderesse a constaté que l'additif, sous forme de granulés après disparition de la colle, relargue plus de 70 % de son eau en moins de 6 heures, à une température comprise entre 140 et 180°C. Le même additif sous forme de poudre, ayant un diamètre moyen de 10 $\mu$m, relargue plus de 70% de son eau en 15 heures environ, à une température comprise entre 140 et 180°C lors d'essais en laboratoire.

Selon une variante avantageuse de l'invention, l'additif utilisé est une zéolithe naturelle et/ou synthétique, ou sa phase de synthèse initiale amorphe.

Avantageusement, la zéolithe est une zéolithe fibreuse, une zéolithe lamellaire et/ou une zéolithe cubique. La zéolithe utilisée peut appartenir au groupe de saujasites, chabasites, phillipstes, clilioptilolites, et/ou paulingites.

Avantageusement, la zéolithe utilisée est une zéolithe synthétique du type A, P, X et/ou Y.

De préférence, on utilisera un granulé de zéolithe de type A, notamment de la formule brute $Na_{12}(AlO_2)_{12}$ $(SiO_2)_{12}$, 27 $H_2O$ où $Na_2O$ est de 18 %, $Al_2O_3$ de 28 %, $SiO_2$ de 33 % et $H_2O$ de 21 %.

Par comparaison aux zéolithes de sources naturelles, les zéolithes artificielles ont souvent l'avantage de présenter une homogénéité et une qualité constante, ce qui est avantageux notamment pour la finesse requise.

Selon une variante avantageuse de l'invention, l'additif est introduit dans le malaxeur (enrobeur) a un taux de 0,1 à 5 % en poids, notamment de 0,2 à 0,8 % en poids par rapport au poids total du mélange.

L'enseignement selon l'invention rend possible de réduire la température d'enrobage pour la fabrication de mélanges comprenant des liants bitumineux sans produire une augmentation non désirée de la viscosité. Il est conféré aux enrobés bitumineux ou au béton bitumineux fabriqués une souplesse plus élevée qui autorise une mise en oeuvre améliorée.

Sans vouloir se limiter à une quelconque théorie, il se peut que l'additif, ayant un haut pouvoir de désorption avec la température, dégage l'eau zéolithique progressivement au moment de l'enrobage et aussi pendant le transport voire la phase de mise en oeuvre du mélange comprenant un liant bitumineux. Cette libération progressive de l'eau permettrait au mélange de rester souple pendant une durée prolongée sans qu'il ne devienne nécessaire d'augmenter la température, ce qui changerait la viscosité. Cette libération de l'eau conférerait au mélange comprenant un liant bitumineux une compressibilité égale à celle que l'on pourrait atteindre sous des températures plus élevées. L'eau libérée cause un moussage du liant sans aucun impact négatif. Ledit effet de moussage s'exprime par une augmentation du volume qui influe positivement sur le mélange bitumineux. Les fines bulles de vapeur d'eau formeraient des micropores qui donnent au mélange de construction une masse volumique réduite. Un avantage particulier consiste en ce que l'agrandissement du volume, qui a lui seul est assez faible, confère à l'enrobé bitumineux une compressibilité nettement améliorée pour les travaux de compactage. L'additif permet d'assurer une distribution uniforme de la vapeur d'eau dans le mélange chaud comprenant un liant bitumineux. Ce qui est déterminant dans ce contexte, c'est que le dégagement de l'eau ne se produit pas spontanément à partir de la limite d'ébullition mais en continu dans un écart de température variant de 110 à 160°C. Selon une variante avantageuse de l'invention, des charges sont en outre introduites avant et/ou pendant l'injection du liant bitumineux. Ces charges permettent d'assurer une distribution homogène de l'additif ayant un haut pouvoir de désorption avec la température dans le mélange à chaud. Avantageusement, les charges sont introduites simultanément avec l'additif. Selon une variante avantageuse, les charges sont des farines de pierres.

Les liants bitumeux envisagés sont tout particulièrement du bitume, des bitumes spéciaux, des bitumes modifiés, des bitumes modifiés par des polymères ou leurs mélanges.

Le procédé selon l'invention permet un abaissement de la température d'enrobage de l'ordre de 30°C à 40°C, ce qui correspond à une réduction des besoins en énergie d'environ 30%. Les valeurs mesurées ont montré que la consommation spécifique d'énergie peut être réduite de 14kWh par tonne d'enrobés bitumineux. Dans le cas d'un poste d'enrobage qui consomme 8 litres de fioul par tonne d'enrobés bitumineux en régime normal, cela correspond à 2,4 litres économisés. Si l'on suppose que la production annuelle d'enrobés en Allemagne (respectivement en France) est de 65 millions de tonnes (respectivement 40 millions de tonnes) environ, il en résulte une suppression de 400 000 tonnes de dioxyde de carbone (respectivement 246 000 tonnes).

De plus, un mélange à une température plus basse génère moins d'aérosols et moins de vapeurs. Les mesures effectuées prouvent également une réduction d'émissions de polluants. Il peut également être constaté un plus faible pourcentage de substances nuisibles et odorantes. Des analyses effectuées dans le cadre d'essais d'enrobage ont donné une valeur de 350,7 mg de vapeurs d'aérosols par mètre cube d'air pour l'utilisation d'un bitume standard B 65 à une température d'enrobage de 168°C et une valeur de 90,4 mg par mètre cube d'air pour une température d'enrobage de 142°C réduite grâce à l'introduction d'un additif, sous forme de granulés, ayant un haut pouvoir de désorption avec la température, notamment une zéolithe. Une réduction de 26°C de la température d'enrobage a ainsi eu pour résultat une diminution de 74 % des particules ultrafines.

Il y a également des changements sensibles au niveau des odorants. Des évaluations olfactives par des sujets d'expérience ont montré un nombre réduit d'unités olfactives (UO) pour le mélange de construction fabriqué à basse température sur la base de l'enseignement selon l'invention par comparaison à un enrobé fabriqué à une température d'enrobage normale. Quant au comportement à la mise en oeuvre, aucun désavantage n'a pu être constaté par rapport aux enrobés bitumineux classiques. Des structures superficielles désirées ont également pu être réalisées sans problème.

Des changements relatifs aux caractéristiques d'emploi, à la stabilité, à l'adhérence, à l'insensibilité aux intempéries et à la durabilité n'ont pas été constatés. Les enrobés bitumineux fabriqués selon le procédé décrit par l'invention présentent donc les mêmes propriétés et caractéristiques que les enrobés bitumineux classiques, fabriqués à des températures plus élevées.

La présente invention a aussi pour objet un mélange de construction comprenant un liant bitumineux, notamment un béton bitumineux ou des enrobés bitumineux, susceptible d'être obtenu par le procédé selon la présente invention, caractérisé en ce que lors de sa mise en oeuvre les émissions d'aérosols sont inférieures à 0,5 mg/m$^3$, avantageusement inférieures à 0,36 mg/m$^3$.

Lors de la mise en oeuvre d'enrobés bitumineux, susceptibles d'être obtenus par le procédé selon la présente invention, sur un chantier routier on a mesuré les émissions d'aérosols à proximité du conducteur de finisseur, du conducteur de compacteur et de la table du finisseur.

Un finisseur est un engin routier automoteur qui, recevant les matériaux prêts à l'emploi, les répand, les nivelle, les dame et les lisse, livrant après son passage un revêtement fini.

Un compacteur est un engin qui permet de réduire par vibration, roulage ou pilonnage le volume apparent des enrobés bitumineux.

Avantageusement, lors de la mise en oeuvre du mélange de construction selon la présente invention, les émissions d'aérosols et de vapeur à proximité :

- du conducteur de finisseur sont comprises entre 0,5 et 1 mg/m$^3$ ;
- du conducteur de compacteur sont inférieures à 2 mg/m$^3$ ; et
- de la table du finisseur sont comprises entre 0,36 et 0,6 mg/m$^3$.

La présente invention a aussi pour objet l'utilisation d'un additif ayant un haut pouvoir de désorption avec la température, sous forme de granulés, pour contrôler la température du mélange comprenant le granulat et le liant bitumineux, tant que le mélange reste en masse.

Les granulés d'additif comprennent de fines particules dudit additif ayant un diamètre moyen compris entre 0,2 et 0,4 $\mu$m. Les fines particules sont liées entre elles au moyen d'un liant ou d'une colle. La colle peut notamment être un dérivé de la cellulose, tel que la carboxyméthylcellulose. Avantageusement, les granulés d'additif ont un diamètre moyen compris entre 0,1 et 2 mm.

Selon une variante avantageuse de l'invention, l'additif utilisé est une zéolithe naturelle et/ou synthétique, ou sa phase de synthèse initiale amorphe. Avantageusement, la zéolithe est une zéolithe fibreuse, une zéolithe lamellaire et/ou une zéolithe cubique. La zéolithe utilisée peut appartenir au groupe de saujasites, chabasites, phillipstes, clilioptilolites, et/ou paulingites. Encore plus avantageusement, la zéolithe utilisée est une zéolithe synthétique du type A, P, X et/ou Y. De préférence, on utilisera un granulé de zéolithe de type A, notamment de la formule brute $Na_{12}(AlO_2)_{12}$ $(SiO_2)_{12}$, 27 $H_2O$ où $Na_2O$ est de 18 %, $Al_2O_3$ de 28 %, $SiO_2$ de 33 % et $H_2O$ de 21 %.

Il est conseillé d'utiliser un additif dont la teneur en eau est comprise entre 5 et 30 % en poids, notamment entre 15 et 25 % en poids par rapport au poids total de l'additif.

Selon une variante avantageuse de l'invention, l'additif est introduit dans le malaxeur (enrobeur) a un taux de 0,1 à 5 % en poids, notamment de 0,2 à 0,8 % en poids par rapport au poids total du mélange.

Avantageusement, ledit additif permet de maintenir la température du mélange à environ la température d'enrobage atteinte à l'issue de l'étape b), tant que le mélange reste en masse.

La température d'enrobage atteinte à l'issue de l'étape b) peut être calculée par la formule suivante :

$$T_e = (c_g \times m_g \times T_1 + c_L \times m_L \times T_2) / (m_g \times c_g + m_L \times c_L)$$

dans laquelle $T_e$ représente la température d'enrobage atteinte suite à l'étape b)
$c_g$ représente la chaleur massique des granulats
mg représente la quantité de granulats
$T_1$ représente la température de séchage des granulats, définie à l'étape a)
$c_L$ représente la chaleur massique du liant bitumineux
$m_L$ représente, la quantité de liant bitumineux
$T_2$ représente la température de chauffage du liant bitumineux, définie à l'étape a).

Lors de son passage dans la vis du finisseur, l'enrobé est réparti et les échanges thermiques avec l'extérieur sont plus importants. Avant cette étape, on peut considérer que l'enrobé « reste en masse », aussi bien dans le camion que dans la trémie du finisseur.

La présente invention a également pour objet l'utilisation dudit additif pour augmenter la maniabilité d'un mélange de construction comprenant un liant bitumineux, notamment d'un béton bitumineux ou d'enrobés bitumineux.

En particulier, ledit additif ayant un haut pouvoir de désorption avec la température permet d'augmenter la maniabilité d'un mélange de construction comprenant un liant bitumineux, notamment d'un béton bitumineux ou d'enrobés bitumineux, dans des conditions atmosphériques de mise en oeuvre du mélange de construction difficiles, notamment à des températures ambiantes comprises entre 5 et 10°C. Il pourrait aussi être envisageable de pouvoir travailler à des températures ambiantes plus froides. Il parait toutefois difficile de pouvoir travailler à des températures ambiantes inférieures à 2°C.

A température d'enrobage égale, l'ajout de l'additif, tel que défini précédemment, permet d'améliorer la maniabilité du mélange bitumineux. Cette propriété est particulièrement avantageuse lorsqu'on travaille en extérieur, à des températures ambiantes à la limite des tolérances habituelles. Si on désire appliquer un enrobé ou un béton bitumineux ne comprenant pas cet additif d'épaisseur supérieure à 5 cm, par exemple une couche de roulement ou de chaussée, la température ambiante doit être supérieure à 5°C. Pour une épaisseur inférieure à 4 cm, la température ambiante doit être supérieure à 10°C.

Dans des conditions atmosphériques de mise en oeuvre extrêmes, les enrobés bitumineux classiques ne peuvent pas être épandus en raison de la trop grande différence de température existante entre l'air ambiant et la température des enrobés bitumineux. En effet, au contact de l'air ambiant, l'enrobé se refroidit, la température du liant diminue entraînant une augmentation de son module et par là même une rigidification de l'enrobé. En conséquence, la maniabilité de l'enrobé bitumineux diminue conduisant à une difficulté de compactage. L'ajout dudit additif permet d'améliorer la maniabilité des enrobés bitumineux, malgré la différence de température importante, et ainsi permet de continuer à travailler avec des enrobés bitumineux dans des conditions atmosphériques extrêmes. Il est à noter que lorsque l'air ambiant est à une température comprise entre 5 et 10°C, voire entre 2 et 10 °C, le sol peut être à une température encore plus faible.

La présente invention concerne également un dispositif pour la fabrication d'un mélange de construction comprenant des liants bitumineux notamment d'un béton bitumineux ou d'enrobés bitumineux constitués d'un malaxeur (enrobeur) mélangeant les granulats minéraux et/ou synthétiques, le liant, l'additif ayant un haut pouvoir de désorption avec la température et, le cas échéant, les charges.

Un dispositif pour la fabrication d'un mélange de construction comprenant un liant bitumineux, notamment d'un béton bitumineux ou d'enrobés bitumineux, constitué d'un malaxeur (enrobeur) mélangeant un agrégat minéral et/ou synthétique, un liant et, le cas échéant, des charges se signale par un silo affecté à ce dispositif, où est stocké un additif ayant un haut pouvoir de désorption avec la température, par un dispositif de pesage en aval du silo pour le dosage de l'additif dans le malaxeur (enrobeur) et par le fait que le dispositif de pesage est relié au malaxeur (enrobeur) par le biais d'un moyen d'acheminement. Ce moyen d'acheminement peut être un convoyeur tel qu'une vis transporteuse pour l'amenée des charges vers le malaxeur (enrobeur). Il peut s'agir également d'un convoyeur pneumatique alimentant le dispositif d'introduction, par exemple une buse, existant dans le malaxeur (enrobeur).

Dans le cas d'un silo mobile, celui-ci devrait présenter des dimensions standard de nature à permettre le transport par camion, notamment par un poids lourd.

L'amenée de l'additif du silo vers le dispositif de pesage se fait par le biais d'un sas rotatif servant de distributeur alvéolaire. Pour mettre à disposition un poste mobile maniable, il est de plus conseillé de disposer les stations de commande, les dispositifs de pesage et les moyens d'acheminement sur un châssis roulant pouvant être aligné sur le silo.

En résumé, on peut constater qu'un mélange de construction fabriqué selon le procédé décrit par l'invention, notamment un béton bitumineux ou des enrobés bitumineux, correspond aux enrobés fabriqués selon l'art existant à des températures plus élevées au niveau de la composition minérale, de la nature et de la quantité du liant, du déroulement des opérations d'enrobage dans le temps, et du rendement des centrales.

Les opérations d'ajout et de pesage séparé de l'additif n'exigent pas de modification des temps de malaxage des gâchées, ce qui fait que le rendement des postes d'enrobage classiques reste identique. Ceci est également vrai pour le cas où le régime continu serait utilisé à la place de la fabrication discontinue.

La réduction de plus de 30°C de la température de l'enrobé entraîne une plus faible consommation spécifique d'énergie. Les économies d'énergie qui en résultent aident énormément à la protection de l'environnement par la réduction des rejets de $CO_2$ à l'atmosphère et par la réduction des teneurs en polluants et odorants. Le fonctionnement à des températures moins élevées permet de diminuer l'usure des parties technologiques. Comme la température du liant est réduite du fait des basses températures des granulats, les valeurs d'oxydation sont par conséquent plus basses, ce qui freine le vieillissement du liant et permet de ce fait de prolonger la durée de vie des revêtements bitumineux.

Les figures suivantes illustrent un dispositif particulièrement approprié, selon la présente invention.

Figure 1  schéma du procédé de fabrication d'un mélange de construction comprenant un liant bitumineux,

Figure 2  un deuxième schéma du procédé de fabrication d'un mélange de construction comprenant un liant bitumineux,

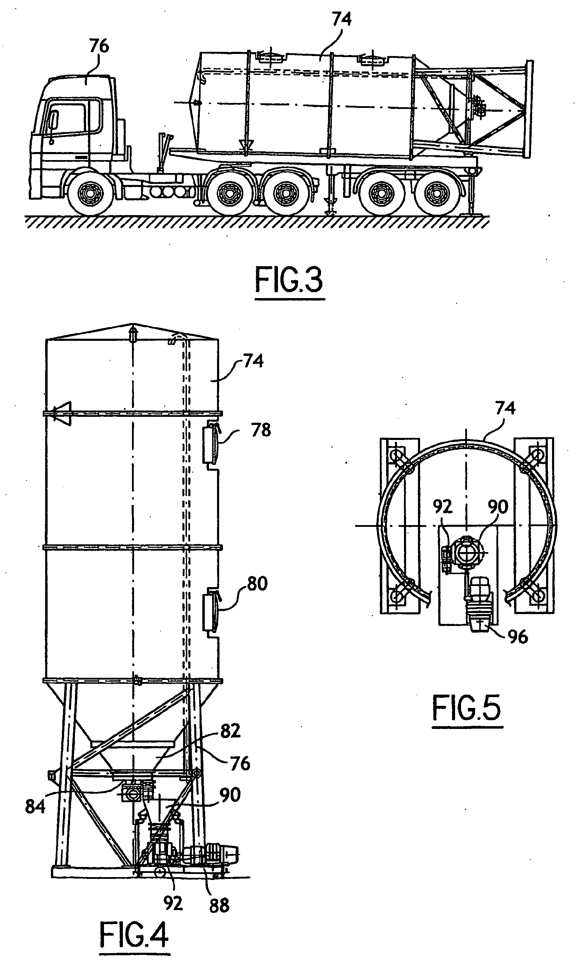

Figure 3  un silo porté sur camion,

Figure 4  le silo selon la figure 3 en position opérationnelle,

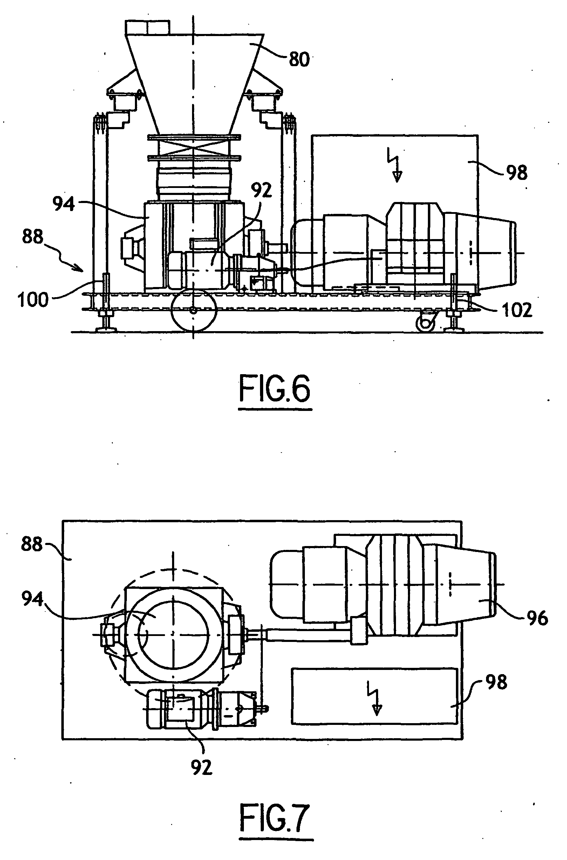

Figure 5  une vue du haut du silo selon la figure 4,

Figure 6  un schéma de principe montrant un châssis roulant portant l'ensemble de pesage et d'acheminement,

Figure 7  une vue du haut du châssis roulant selon la figure 6,

Figure 8  un schéma de principe montrant un malaxeur pour la fabrication d'un mélange de construction comprenant un liant bitumineux et

Figure 9  un mode de réalisation d'un tambour sécheur (enrobeur).

La figure suivante illustre les propriétés des enrobés bitumineux obtenus par le procédé selon la présente invention.

Figure 10  évolutions des températures sur un chantier mettant en oeuvre des enrobés bitumineux tièdes.

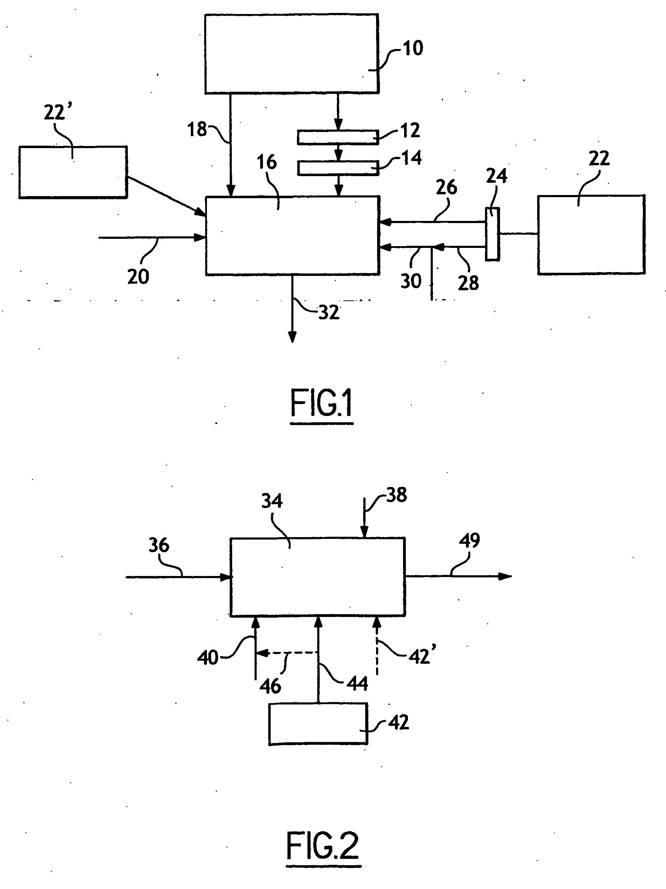

Les figures 1 et 2 sont deux schémas qui illustrent le principe du procédé de fabrication d'un mélange de construction comprenant un liant bitumineux, notamment d'un béton bitumineux. La figure 1 représente un procédé de fabrication discontinu et la figure 2 un procédé de fabrication en continu.

Selon la variante de réalisation de la figure 1, les granulats sont dans un premier temps séchés dans un tambour 10 pour être ensuite éventuellement criblés (opération 12) et puis séparés et stockés en fonction de leurs granulométries (opération 14). Ensuite, ces granulats sont introduits dans un malaxeur 16 selon la formule du mélange comprenant un liant bitumineux à fabriquer. En alternative, il est possible d'amener des granulats directement du tambour 10 vers le malaxeur 16 (flèche 18).

Puis, le bitume est introduit par injection ou pulvérisation (flèche 20) dans le malaxeur 16 où les granulats présentent une température de l'ordre de 110°C à 160°C.

De plus, un additif ayant un haut pouvoir de désorption avec la température, comme notamment une zéolithe, est repris à un silo 22 par le biais d'un dispositif de pesage 24 et introduit par voie d'injection ou de pulvérisation (26) dans le malaxeur 16 ou bien l'additif est dosé en combinaison avec des charges telles que des farines de pierres (flèches 28, 30).

En alternative, l'additif ayant un haut pouvoir de désorption avec la température peut être stocké ou transporté dans des sacs à jeter dits sacs non retour. L'additif dans ces sacs peut être versé dans des trémies de dosage ou être versé directement dans le malaxeur (22').

Ces mesures permettent de fabriquer le mélange comprenant un liant bitumineux à des températures considérablement moins élevées que celles des procédés de l'art existant.

Considérablement moins élevée se rapporte ici à une baisse de température d'au moins 30°C par rapport à la température normalement mise en oeuvre. Après une durée globale d'environ 40 à 60 secondes, pendant laquelle les granulats ont été mélangés avec le bitume, l'additif et éventuellement les charges dans le malaxeur 16, le mélange bitumineux est évacué du malaxeur (flèche 32) pour rechargement immédiat du malaxeur 16 de la manière précitée.

La figure 2 montre le principe d'un procédé continu. Ici, le sécheur 10 selon figure 1 et le malaxeur 16 constituent une unité sous forme par exemple d'un tambour sécheur (enrobeur) 34 dans lequel sont introduits des granulats à une extrémité (flèche 36) pour être séchés dans le sécheur 34. Le bitume est ensuite, introduit après le séchage nécessaire des granulats, par exemple par pulvérisation ou par injection (flèche 38). Il est ajouté, de préférence antérieurement au bitume, des charges (flèche 40) ainsi qu'un additif ayant un haut pouvoir de désorption avec la température et venant d'être repris au silo et pesé (flèche 44), l'additif pouvant, en alternative, être introduit dans le tambour sécheur 34 en même temps que les charges par le biais, par exemple, d'une vis d'amenée de façon que les charges et l'additif soient mélangés pendant l'introduction. Le principe de cette introduction simultanée est signalé par la flèche en traits interrompus 46. Selon une autre variante avantageuse, des sacs d'additifs peuvent être versés directement dans le tambour sécheur (34), cette opération est signalée par la flèche en pointillée 42'. Après l'enrobage de bitume des granulats, le produit fini bitumineux est immédiatement évacué (flèche 49) du tambour sécheur. Le procédé ainsi décrit est réalisé en régime continu.

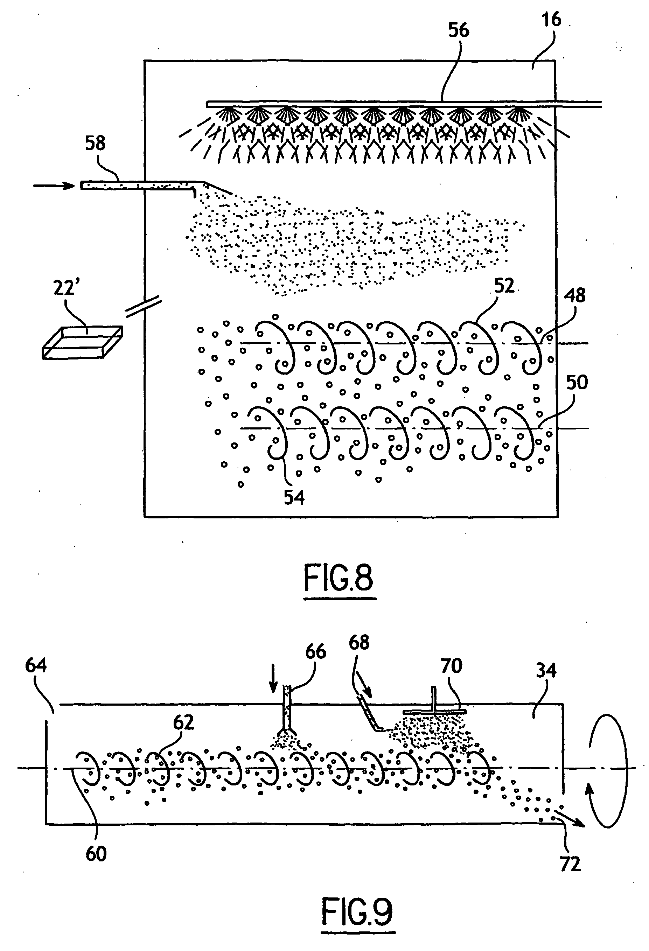

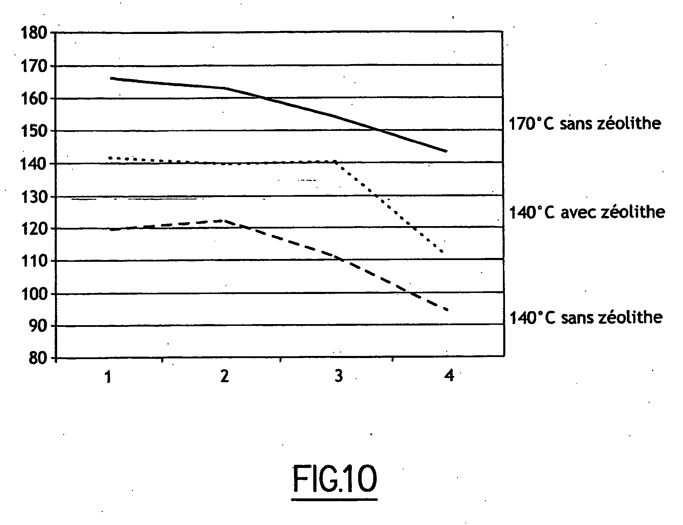

Les figures 8 et 9 permettent d'expliquer en plus de détail les deux procédés décrits précédemment utilisant soit le malaxeur 16 soit le tambour sécheur 34. La figure 8 est le schéma de principe d'un malaxeur 16 dont la partie inférieure est munie d'organes de malaxage 48, 50 à bras rotatifs 52, 54 pour imprimer un mouvement de turbulence aux granulats introduits. Au-dessus des organes de malaxage 48, 50, le malaxeur est doté d'un arrangement de buses 56 servant à l'injection ou à la pulvérisation du bitume dans le but d'enrober de bitume les granulats mis en turbulence par les organes de malaxage 48, 50. Afin de pouvoir réaliser cette opération de malaxage à des températures relativement faibles, on introduit en plus un additif ayant un haut pouvoir de désorption avec la température, avantageusement sous forme de zéolithe, au moyen d'un dispositif d'amenée 58 qui peut être également un arrangement de buses d'injection ou au moyen d'une trappe ou système d'accès (22') au malaxeur. Il est possible d'ajouter aussi des charges telles qu'une farine de pierres, soit avec l'additif, soit séparément. Comme il est illustré en figure 1, le malaxeur 16 effectue une fabrication discontinue d'un mélange de construction comprenant un liant bitumineux.

La figure 9 a pour but d'illustrer le procédé continu selon la figure 2. A l'intérieur du tambour sécheur 34, il existe un élément mélangeur 60 étendu sur presque toute la longueur, également sous la forme d'un organe de malaxage à bras rotatifs écartés 62, et qui permet d'imprimer un mouvement de turbulence aux granulats introduits et de les sécher. Les granulats sont à cet effet portés à une température d'environ 110°C à 160°C. Ensuite, des charges sont introduites par le biais d'un dispositif d'amenée 66 à une certaine distance de l'ouverture de chargement 64. A un autre point d'amenée, qui se trouve à une certaine distance de l'amenée des charges et qui correspond donc à un certain laps de temps, on réalise l'introduction de l'additif ayant un haut pouvoir de désorption avec la température pour permettre la fabrication du mélange bitumineux désiré à des températures relativement faibles. Puis, il y a un dispositif à buses 70 pour l'injection ou la pulvérisation du bitume dans le but d'enrober les granulats avec suffisamment de bitume. Finalement, le produit fini bitumineux est extrait par l'ouverture de sortie 72.

Afin de pouvoir réaliser le dosage requis de l'additif, qui est avantageusement introduit à des taux de 0,1 à 5 pour cent en poids, notamment de 0,2 à 0,8 pour cent en poids, du mélange de granulats, de bitume et de charges, un silo 74 est prévu dont les dimensions sont de nature à permettre son transport sur un camion 76. Le silo 74 s'appuie sur une charpente de support 76. En dehors des ouvertures de remplissage 78, 80 prévues sur les côtés du silo 74 ainsi que des conduites de remplissage de purge non identifiées en détail et nécessaires pour pouvoir aérer le silo 74, celui-ci possède une console avec un dispositif vibrant 82 pour assurer le comportement rhéologique désiré de l'additif stocké dans le silo 74.

Afin de réaliser le bon dosage de l'additif et de l'amener vers le malaxeur 16 ou le tambour sécheur 34, il existe un châssis roulant 88 qui porte un poste doseur à distributeur alvéolaire 90 et peut être aligné sur l'ouverture 84 du silo 74. Le distributeur alvéolaire 90 peut être actionné par le biais d'un moteur électrique 92. Puis, l'additif est pesé dans un dispositif pondéral et ensuite amené vers un réservoir d'expédition 94. Un compresseur rotatif 96 génère ensuite l'air comprimé utilisé pour l'acheminement de l'additif vers le malaxeur 16 ou le tambour sécheur 34. En alternative, l'additif peut être introduit par une vis transporteuse réalisant l'introduction des charges dans le malaxeur 16 ou le tambour sécheur 34.

Le châssis roulant 88 est également équipé d'une station de commande 98. Des broches filetées 100, 102 autorisent l'alignement horizontal du châssis roulant.

Les exemples suivant illustrent la présente invention sans en limiter la portée.

**Exemple 1 : propriétés physico-chimiques d'une zéolithe de type A, sous forme de granulés**

La zéolithe de type A a la formule brute suivante : $Na_{12}(AlO_2)_{12}(SiO_2)_{12}$, 27 $H_2O$ où la quantité de $Na_2O$ est de 18 %, $Al_2O_3$ de 28 %, $SiO_2$ de 33 % et $H_2O$ de 21 %.
Les propriétés physico-chimiques d'une zéolithe de type A, sous forme de granulés sont les suivantes :

| | |
|---|---|
| Taille moyenne des particules | 380 μm |
| Densité | 2,0 g/cm$^3$ |
| Densité apparente | 550 ± 50 g/L |
| Perte par calcination | 20% |
| pH (1% dans l'eau) | 11 |

**Exemple 2: caractéristiques de la zéolithe en poudre et en granulés**

Le tableau 1 suivant présente les caractéristiques granulométriques d'une zéolithe de type A pulvérulente et sous forme de granulés.

Tableau 1

| Zéolithes | Poudre | Granulés | Granulés après disparition de la colle |
|---|---|---|---|
| Diamètre moyen (μm) | 10 | 500 | 3 |
| Masse volumique apparente sèche (t/m$^3$) | 0,475 | 0,624 | - |
| Masse volumique réelle humide (t/m$^3$) | 1,974 | - | 2,141 |

Les tableaux 2 et 3 suivant indiquent les mesures de perte en eau des zéolithes en poudre et sous forme de granulés, avant et/ou après disparition de la colle, en fonction du temps et de la température, lors d'essais en laboratoire.
Le tableau 2 suivant indique les résultats obtenus lors d'essais en laboratoire en mode statique. Ainsi, pour une température imposée, on a suivi dans le temps la perte en masse de chaque échantillon.

Tableau 2

| Zéolithes | Poudre | | | Granulés après disparition de la colle | | |
|---|---|---|---|---|---|---|
| Température (°C) | 140 | 160 | 180 | 140 | 160 | 180 |
| Perte en eau (%) | 13,6 | 17,2 | 21,2 | 14,7 | 17,1 | 18,8 |
| Temps d'atteinte | Environ 15 heures | | | Environ 6 heures | | |

Le tableau 3 suivant indique les résultats obtenus lors d'essais en laboratoire en mode dynamique à l'aide de la DSC, avec variation de la température dans le temps (5°C/min).

Tableau 3

| Zéolithes | Poudre | Granulés avant disparition de la colle | Granulés après disparition de la colle |
|---|---|---|---|
| Température (°C) | 140 | 140 | 140 |
| Perte en eau (%) | 11,6 | 12,3 | 15,5 |

**Exemple 3 : chantier comparatif**

Nous avons effectué un suivi comparatif de production d'enrobés BBSG 0/10 avec et sans zéolithe. Ce suivi avait pour but d'évaluer le rôle de la zéolithe, sous forme de granulés, sur la maniabilité des enrobés dits « tièdes » et de quantifier l'économie faite sur l'énergie de chauffe des granulats.
La mise en oeuvre de ces enrobés BBSG 0/10 de 5 cm d'épaisseur au bitume 35/50 en couche de liaison a également fait l'objet d'un suivi tant au niveau des températures que du mode de compactage.

Un carottage sur chantier a été prévu pour déterminer les compacités réelles et les modules de l'enrobé.

## Programme de travail

Cadences de fabrication :

Avec et sans zéolithe : 140 t/h pour se mettre dans les mêmes conditions

Les essais sont les suivants :

- essai 1 : BBSG sans zéolithe à une température d'enrobage de 170°C
- essai 2 : BBSG avec zéolithe à une température d'enrobage de 140°C
- essai 3 : BBSG sans zéolithe à une température d'enrobage de 140°C

Procédures de séchage des granulats :

Essai 1 : 180°C
Essai 2 : 150°C
Essai 3 : 150°C

Procédures de malaxage des enrobés :

A ajuster pour obtenir les températures d'enrobage visées ci-dessous

Température du bitume 35/50 : 165°C
Malaxage à sec avec zéolithes : rajouter 20 secondes
Introduction du bitume
Malaxage : 15 secondes
Température de l'enrobé sans zéolithes : 170°C
Température avec zéolithes et pour les dernières 50 tonnes : 140°C

Des mesures sur les vapeurs et les aérosols émises lors de la mise en oeuvre ont été réalisées en équipant de capteurs les 2 ouvriers d'application, la table du finisseur, le conducteur du finisseur et le conducteur du compacteur.

## Situation du chantier expérimental

Au mois d'octobre, temps doux avec parfois de la pluie et du vent.

## Formulation des BBSG 0/10

Les compositions testées sont données dans le tableau 4 suivant :

Tableau 4

| Compositions | BBSG avec Zéolithes | BBSG sans Zéolithe |
|---|---|---|
| 6/10 concassé Noubleau | 33,5 % | 33,5 % |
| 2/6 concassé Noubleau | 21 % | 21 % |
| 0/4 SEINE | 34 % | 34 % |
| 0/2 CCB | 10% | 10% |
| Filler calcaire | 1,5 % | 1,5 % |
| Granulés de zéolithes | 0,3 ppc | - |
| Bitume 35/50 | 5,6ppc | 5,6ppc |
| Module de richesse | 3,59 | 3,59 |

**Conditionnement de la zéolithe**

La zéolithe a été ensachée à raison de 8kg/sac afin de respecter le dosage de 0,3 % pour 2,5 tonnes d'enrobé par gâchée.

**Enregistrement des températures à la centrale**

La centrale utilisée est un poste d'enrobage à chargement discontinu.

Un listing de suivi édité à la centrale a permis de recueillir les températures par type d'enrobés et par gâchée.

**Evaluation des consommations de gaz**

Un bilan économique basé sur l'abaissement de la température d'enrobage des enrobés avec Zéolithe (170 à 140°C) et le suivi des consommations de gaz a été calculé : les résultats sont consignés dans le tableau 5 suivant :

Tableau 5

|        | Zéolithe | Tonnage d'enrobés | Consommation de gaz | Débit m3/tonne | KW |
|--------|----------|-------------------|---------------------|----------------|-----|
| **0/10** | Non | 92,4 | 548 | 5,93 | 69 |
| **0/10** | Oui | 168 | 794 | 4,73 | 55 |

Puissance =11,60 kW/tonne d'enrobé

Le prix du kW payé par la centrale est de 0,0152 Euros

Ce gain est évalué à : (69-55) x 0,0152 = 0,21 Euros par tonne (ou 1,4 F/tonne)

**Températures du BBSG 0/10 avec et sans zéolithes sur chantier.**

Les relevés de température des enrobés ont été effectués :

- A l'arrivée sur chantier (après environ 1 heure de transport).
- Dans la trémie du finisseur
- Dans la vis du finisseur.
- Au niveau de la table du finisseur.

Celles-ci sont reportées sur la figure 10.

**Contrôles des produits : Carottage des enrobés sur le chantier**

Le recoupement entre les zones de carottage et le plan de pose de chaque camion relatif à une fabrication précise a permis d'obtenir des résultats, reportés dans le tableau 8 suivant, concernant la compacité des zones « avec » et « sans » zéolithe. Le mode de compactage utilisé est un compactage immédiat. Afin de pouvoir comparer les résultats entre eux, les valeurs de vides mesurées ont ensuite été ramenées à des valeurs pour une épaisseur de revêtement de 5 cm. Les résultats sont rassemblés dans le tableau 6 suivant :

Tableau 6

| Consignes de fabrication | Carottes | | | |
|--------------------------|----------|-----------|-------------------|---------|
|                          | e (cm) | Vides (%) | Vides pour 5cm (%) | Module |
| 170 °C sans zéolithe essai 1 | 6,1 | 6,7 | 6,0 | 11 000 |
| 140°C avec zéolithe essai 2 | 4,8 | 5,3 | 6,6 | 12 400 |
| 140°C sans zéolithe essai 3 | 4,5 | 8,5 | 9,2 | 10 400 |

On s'aperçoit que l'introduction de zéolithe sous forme de granulés permet d'obtenir des indices de vides inférieurs et un module supérieur, ce qui traduit une meilleure maniabilité.

**Conclusion**

La fabrication des enrobés BBSG 0/10 à base de Zéolithe n'a pas posé de problème particulier. L'économie de gaz dû à la diminution de la chauffe des granulats (170 à 140°C) a permis de chiffrer ce gain de l'ordre de 0,21 Euros pour une tonne d'enrobés.

A compactage identique, le BBSG 0/10 avec zéolithe, enrobé à 140°C, a un pourcentage de vides moyen de 5,3%, inférieur à celui du BBSG 0/10 de référence, qui est de 6,7%, enrobé à 170°C sans zéolithe. Ces résultats confirment que l'abaissement de la température d'enrobage en présence de zéolithe sous forme de granulés ne conduit pas à une baisse de maniabilité, bien au contraire. Alors que l'abaissement de la température d'enrobage sans zéolithe conduit à des enrobés bitumineux plus difficiles à compacter.

De plus, après analyse de l'évolution des températures tout au long du cheminement des enrobés, il apparaît que la zéolithe permet le maintien de la température tant que l'enrobé reste en masse dans le camion.

**Exemple 4 : mesure des émissions aériennes dégagées par les bitumes lors de Chantiers de constructions routières.**

Lors du chantier de l'exemple 3, on a mesuré les émissions d'aérosols et de vapeur à proximité :

- du chauffeur de finisseur (F),

- du chauffeur de compacteur (C),

- de la table du finisseur, à gauche (LS) et à droite (RS).

Les résultats sont rassemblés dans le tableau 7 suivant. Ces mesures ont été faites par un organisme allemand indépendant.

Tableau 7

| | 170°C sans zéolithe | | 140°C avec zéolithe | |
|---|---|---|---|---|
| | Aérosols (mg/m3) | Aérosols + vapeur (mg/m3) | Aérosols (mg/m3) | Aérosols + vapeur (mg/m3) |
| Finisseur | <0.8 | 0.8 à 1.2 | <0.36 | 0.50 à 1.0 |
| Table gauche | <0.8 | 0.9 à 2.7 | <0.36 | 0.36 à 0.6 |
| Table droite | <0.8 | <0.8 | <0.36 | 0.36 à 0.5 |
| Compacteur | <0.8 | 1.7 | <0.36 | 1.0 |

On constate que dans tous les cas les émissions dans l'atmosphère sont réduites lorsque la température de l'enrobé diminue.

**Revendications**

**1.** Procédé de préparation d'un mélange de construction comprenant un liant bitumineux, notamment d'un béton bitumineux ou d'enrobés bitumineux, **caractérisé en ce qu'**il comprend les étapes suivantes :

a) séchage, dans un dispositif malaxeur (enrobeur), de granulats à une température $T_1$ comprise entre 110 et 160 °C ; puis
b) enrobage desdits granulats, qui sont à la température $T_1$, par injection dans le dispositif malaxeur (enrobeur) d'un liant bitumineux chauffé à une température $T_2$ comprise entre 140 et 190 °C ;

et **en ce que**, avant et/ou pendant l'injection du liant bitumineux, on introduit dans le dispositif malaxeur un additif ayant un haut pouvoir de désorption avec la température sous forme de granulés, lesdits granulés comprenant de fines particules dudit additif agrégées au moyen d'un liant, lesdites fines particules ayant un diamètre moyen compris entre 2 μm et 4μm.

2. Procédé selon la revendication 1, **caractérisé en ce que** la température $T_2$ de chauffage du liant bitumineux est supérieure, avantageusement de 30°C environ, à la température $T_1$ de séchage des granulats.

3. Procédé selon l'une quelconque des revendications 1 ou 2, **caractérisé en ce que** les granulés d'additif introduits ont un diamètre moyen compris entre 0,2 mm et 1 mm.

4. Procédé selon l'une quelconque des revendications précédentes, **caractérisé en ce que** les fines particules ont une surface spécifique comprise entre 8000 et 25 000 cm$^2$/g, avantageusement une surface spécifique d'au moins 15 000 cm$^2$/g.

5. Procédé selon l'une quelconque des revendications précédentes, **caractérisé en ce que** la teneur en eau de l'additif utilisé est de 5 à 30 % en poids, notamment de 15 à 25 % en poids, par rapport au poids total de l'additif.

6. Procédé selon l'une quelconque des revendications précédentes, **caractérisé en ce que** l'additif utilisé est une zéolithe, naturelle et/ou synthétique, ou sa phase de synthèse initiale amorphe.

7. Procédé selon la revendication 6, **caractérisé en ce que** la zéolithe utilisée est une zéolithe fibreuse, une zéolithe lamellaire et/ou une zéolithe cubique.

8. Procédé selon l'une quelconque des revendications 6 ou 7, **caractérisé en ce que** la zéolithe utilisée appartient au groupe des faujasites, chabasites, phillipsites, clinoptilolites, et/ou paulingites.

9. Procédé selon l'une quelconque des revendications 6 à 8, **caractérisé en ce que** la zéolithe utilisée est une zéolithe synthétique du type A, P, X, et/ou Y.

10. Procédé selon l'une quelconque des revendications précédentes, **caractérisé en ce que** lors d'essais menés en laboratoire les fines particules relarguent plus de 70% de leur eau en moins de 6 heures, à une température comprise entre 140 et 180°C.

11. Procédé selon l'une quelconque des revendications précédentes, **caractérisé en ce que** l'additif est introduit dans le malaxeur à un taux de 0,1 à 5 % en poids, notamment de 0,2 à 0,8 % en poids, par rapport au poids total du mélange.

12. Procédé selon l'une quelconque des revendications précédentes, **caractérisé en ce que** des charges sont en outre introduites avant et/ou pendant l'injection du liant bitumineux.

13. Procédé selon la revendication 12, **caractérisé en ce que** les charges sont introduites simultanément avec l'additif.

14. Procédé selon la revendication 12 ou 13, **caractérisé en ce que** les charges sont des farines de pierres.

15. Procédé selon l'une quelconque des revendications précédentes, **caractérisé en ce que** le liant bitumeux utilisé est un bitume, un bitume spécial, un bitume modifié, un bitume modifié par des polymères, ou leurs mélanges.

16. Mélange de construction comprenant un liant bitumineux, notamment d'un béton bitumineux ou d'enrobés bitumineux, susceptible d'être obtenu par le procédé selon l'une quelconque des revendications précédentes, **caractérisé en ce que** lors de sa mise en oeuvre, les émissions d'aérosols sont intérieures à 0,5 mg/m$^3$, avantageusement inférieures à 0,36 mg/m$^3$.

17. Utilisation d'un additif, sous forme de granulés, tel que défini selon l'une quelconque des revendications 1 à 11, pour contrôler la température du mélange comprenant les granulats et le liant bitumineux tant que ce mélange reste en masse; notamment pour maintenir la température du mélange environ à la température d'enrobage atteinte à l'issue de l'étape b).

18. Utilisation d'un additif, sous forme de granulés, tel que défini selon l'une quelconque des revendications 1 à 11, pour augmenter la maniabilité d'un mélange de construction comprenant un liant bitumineux, notamment d'un béton bitumineux ou d'enrobés bitumineux, en particulier dans des conditions atmosphériques de mise en oeuvre du mélange de construction difficiles, notamment à des températures ambiantes comprises entre 5 et 10°C.

**19.** Dispositif pour la réalisation du procédé selon l'une quelconque des revendications 1 à 15, comprenant un silo (74, 22) dont la sortie (84) est reliée à un dispositif de pesage (24), lui-même relié par le biais d'un moyen d'acheminement à un dispositif de malaxage (16, 34) **caractérisé en ce qu'**un additif ayant un haut pouvoir de désorption avec la température sous forme de granules, lesdits granulés comprenant de fines particules dudit additif agrégées au moyen d'un liant, lesdites fines particules ayant un diamètre moyen compris entre 2 $\mu$m et 4$\mu$m, est stocké dans ledit silo (74, 22), qui possède une console avec un engin vibrant (82) permettant d'assurer le comportement rhéologique désiré dudit additif, et le dispositif de malaxage (16, 34) sert au mélange des granulats, du liant bitumineux, de l'additif et éventuellement des charges.

**20.** Dispositif selon la revendication 19, **caractérisé en ce que** le moyen d'acheminement est identique au dispositif d'amende des charges vers le dispositif de malaxage (16,34).

**21.** Dispositif selon l'une quelconque des revendications 19 et 20, **caractérisé en ce que** le moyen d'acheminement est un convoyeur pneumatique qui alimente le dispositif d'injection (58, 68) existant dans le dispositif de malaxage (16, 34).

**22.** Dispositif selon l'une quelconque des revendications 19 à 21, **caractérisé en ce que** le silo est conçu comme unité mobile ou fixe, notamment le silo est dimensionné de façon à être porté sur un camion (76).

**23.** Dispositif selon l'une quelconque des revendications 19 à 22, **caractérisé en ce que** l'additif peut être acheminé au moyen d'un distributeur alvéolaire (90) et d'un dispositif de pesage disposé en aval du distributeur.

**24.** Dispositif selon l'une quelconque des revendications 19 à 23, **caractérisé en ce qu'**une station de commande (98), un dispositif de pesage et un moyen d'acheminement (96) sont disposé sur un châssis roulant (88) pouvant être aligné sur le silo (74).

**25.** Dispositif selon l'une quelconque des revendications 19 à 24, **caractérise en ce que** le moyen d'acheminement (96) comprend un compresseur rotatif (96) avec un réservoir d'expédition en amont (94).

**Claims**

**1.** Method of preparing a construction mix comprising a bituminous binder, especially a bituminous concrete or a bituminous mix, **characterized in that** it comprises the following steps:

a) aggregates are dried, in a mixing mill (coater), at a temperature $T_1$ of between 110 and 160°C; and
b) said aggregates, which are at the temperature $T_1$, are coated by injecting a bituminous binder heated to a temperature $T_2$ of between 140 and 190°C into the mixing mill (coater),

and **in that**, before and/or during injection of the bituminous binder, an additive having a high desorption capacity with temperature is introduced in the form of granules into the mixing mill, said granules comprising fines of said additive that are aggregated by means'of a binder, said fines having a mean diameter of between 2 $\mu$m and 4 $\mu$m.

**2.** Method according to Claim 1, **characterized in that** the temperature $T_2$ to which the bituminous binder is heated is higher, advantageously by about 30°C, than the temperature $T_1$ at which the granules are dried.

**3.** Method according to either of Claims 1 or 2, **characterized in that** the additive granules introduced have a mean diameter between 0.2 mm and 1 mm.

**4.** Method according to any one of the preceding claims, **characterized in that** the fines have a specific surface area of between 8000 and 25 000 cm$^2$/g, advantageously a specific surface area of at least 15 000 cm$^2$/g.

**5.** Method according to any one of the preceding claims, **characterized in that** the water content of the additive used is from 5 to 30% by weight, especially 15 to 25% by weight, relative to the total weight of the additive.

**6.** Method according to any one of the preceding claims, **characterized in that** the additive used is a natural and/or synthetic zeolite or its amorphous initial synthesis phase.

**7.** Method according to Claim 6, **characterized in that** the zeolite used is a fibrous zeolite, a lamellar zeolite and/or a cubic zeolite.

**8.** Method according to either of Claims 6 or 7, **characterized in that** the zeolite used belongs to the group of faujasites, chabasites, phillipsites, clinoptilolites and/or paulingites.

**9.** Method according to any one of Claims 7 to 8, **characterized in that** the zeolite used is a synthetic A-type, P-type, X-type and/or Y-type zeolite.

**10.** Method according to any one of the preceding claims, **characterized in that** during laboratory trials, the fines release more than 70% of their water in less than 6 hours at a temperature of between 140 and 180°C.

**11.** Method according to any one of the preceding claims, **characterized in that** the additive is introduced into the mixing mill in an amount of 0.1 to 5% by weight, especially 0.2 to 0.8% by weight, relative to the total weight of the mix.

**12.** Method according to any one of the preceding claims, **characterized in that** fillers are furthermore introduced before and/or during injection of the bituminous binder.

**13.** Method according to Claim 12, **characterized in that** the fillers are introduced at the same time as the additive.

**14.** Method according to Claim 12 or 13, **characterized in that** the fillers are stone dust particles.

**15.** Method according to any one of the preceding claims, **characterized in that** the bituminous binder used is a bitumen, a special bitumen, a modified bitumen, a polymer-modified bitumen, or mixtures thereof.

**16.** Construction mix comprising a bituminous binder, especially a bituminous concrete or a bituminous mix, capable of being obtained by the method according to any one of the preceding claims, **characterized in that** while it is being processed, aerosol emissions are less than 0.5 mg/m$^3$, advantageously less than 0.36 mg/m$^3$.

**17.** Use of an additive, in granule form, as defined in any one of Claims 1 to 11, to control the temperature of the mix comprising the aggregates and the bituminous binder while this mix remains intact, in particular to keep the temperature of the mix at approximately the coating temperature reached at the end of step b).

**18.** Use of an additive, in granule form, as defined in any one of Claims 1 to 11, to increase the workability of a construction mix comprising a bituminous binder, especially of a bituminous concrete or of a bituminous mix, in particular under difficult atmospheric conditions for processing the mix, especially at ambient temperatures of between 5 and 10°C.

**19.** Installation for carrying out the method according to any one of Claims 1 to 15, comprising a silo (74, 22), the outlet (84) of which is connected to a weighing device (24) which is itself connected via a conveying means to a mixing mill (16, 34), **characterized in that** an additive having a high desorption capacity with temperature in the form of granules is stored in said silo (74, 22), said granules including fines of said additive that are aggregated by means of a binder, said fines having a mean diameter of between 2 $\mu$m and 4 $\mu$m, which silo possesses a bracket with a vibrator (82) for ensuring the desired rheological behaviour of said additive, and the mixing mill (16, 34) is used for mixing the aggregates, the bituminous binder, the additive and optionally the fillers.

**20.** Installation according to Claim 19, **characterized in that** the conveying means is identical to the device for feeding the fillers into the mixing mill (16, 34).

**21.** Installation according to either of Claims 19 and 20, **characterized in that** the conveying means is a pneumatic conveyor that feeds the injection device (58, 68) present in the mixing mill (16, 34).

**22.** Installation according to any one of Claims 19 to 21, **characterized in that** the silo is designed as a movable or stationary unit, in particular the silo is dimensioned so as to be carried on a lorry (76).

**23.** Installation according to any one of Claims 19 to 22, **characterized in that** the additive may be conveyed by means of a cellular dispenser (90) and a weighing device placed downstream of the dispenser.

24. Installation according to any one of Claims 19 to 23, **characterized in that** a control station (98), a weighing device and a conveying means (96) are placed on a rolling frame (88) that can be aligned with respect to the silo (70).

25. Installation according to any one of Claims 19 to 24, **characterized in that** the conveying means (96) comprises a rotary compressor (96) with an upstream supply tank (94).

**Patentansprüche**

1. Verfahren zur Herstellung einer Mischung für den Bau, die ein Bitumen-Bindemittel insbesondere eines Bitumenbetons oder von Bitumengemischen umfasst, **dadurch gekennzeichnet, dass** es die folgenden Schritte umfasst:

   a) Trocknen von Zuschlagstoffen in einer Mischvorrichtung (einer Umhüllungsvorrichtung) bei einer Temperatur $T_1$ zwischen 110 und 160 °C einschließlich; dann
   b) Umhüllen der Zuschlagstoffe, die sich bei einer Temperatur $T_1$ befinden, durch Einspritzen eines Bitumen-Bindemittels, das bei einer Temperatur $T_2$ zwischen 140 und 190 °C einschließlich erwärmt ist, in die Mischvorrichtung (die Umhüllungsvorrichtung)

   und **dadurch**, dass man vor und/oder während des Einspritzens des Bitumen-Bindemittels ein Additiv mit einem hohen Desorptionsvermögen mit der Temperatur in Granulatform einführt, wobei das Granulat mittels eines Bindemittels aggregierte Feinteilchen des Additivs umfasst, wobei die Feinteilchen einen mittleren Durchmesser zwischen 2 $\mu$m und 4 $\mu$m einschließlich aufweisen.

2. Verfahren nach Anspruch 1, **dadurch gekennzeichnet, dass** die Temperatur $T_2$ der Erwärmung des Bitumen-Bindemittels vorteilhaft über etwa 30 °C bis zur Temperatur $T_1$ der Trocknung der Zuschlagstoffe liegt.

3. Verfahren nach irgendeinem der Ansprüche 1 oder 2, **dadurch gekennzeichnet, dass** das eingeführte Granulat des Additivs einen mittleren Durchmesser zwischen 0,2 mm und 1 mm einschließlich aufweist.

4. Verfahren nach irgendeinem der vorangehenden Ansprüche, **dadurch gekennzeichnet, dass** die Feinteilchen eine spezifische Oberfläche zwischen 8000 und 25000 cm$^2$/g einschließlich, vorteilhaft eine spezifische Oberfläche von mindestens 15000 cm$^2$/g aufweisen.

5. Verfahren nach irgendeinem der vorangehenden Ansprüche, **dadurch gekennzeichnet, dass** der Wassergehalt des verwendeten Additivs 5 bis 30 Gew.-%, insbesondere 15 bis 25 Gew.-%, bezogen auf das Gesamtgewicht des Additivs, beträgt.

6. Verfahren nach irgendeinem der vorangehenden Ansprüche, **dadurch gekennzeichnet, dass** das verwendete Additiv ein natürlicher und/oder synthetischer Zeolith oder dessen anfängliche amorphe Synthesephase ist.

7. Verfahren nach Anspruch 6, **dadurch gekennzeichnet, dass** der verwendete Zeolith ein faseriger Zeolith, ein lamellarer Zeolith und/oder ein kubischer Zeolith ist.

8. Verfahren nach irgendeinem der Ansprüche 6 oder 7, **dadurch gekennzeichnet, dass** der verwendete Zeolith der Gruppe der Faujasite, Chabasite, Phillipsite, Clinoptilolite und/oder Paulingite angehört.

9. Verfahren nach irgendeinem der Ansprüche 7 bis 8, **dadurch gekennzeichnet, dass** der verwendete Zeolith ein synthetischer Zeolith des Typs A, P, X und/oder Y ist.

10. Verfahren nach irgendeinem der vorangehenden Ansprüche, **dadurch gekennzeichnet, dass** bei im Labor durchgeführten Versuchen die Feinteilchen innerhalb von weniger als 6 Stunden bei einer Temperatur zwischen 140 und 180 °C einschließlich mehr als 70 % ihres Wassers ausschwitzen.

11. Verfahren nach irgendeinem der vorangehenden Ansprüche, **dadurch gekennzeichnet, dass** das Additiv mit einem Gehalt von 0,1 bis 5 Gew.-%, insbesondere 0,2 bis 0,8 Gew.-%, bezogen auf das Gesamtgewicht der Mischung, in den Mischer eingeführt wird.

**12.** Verfahren nach irgendeinem der vorangehenden Ansprüche, **dadurch gekennzeichnet, dass** darüber hinaus Füllstoffe vor und/oder während des Einspritzens des Bitumen-Bindemittels eingeführt werden.

**13.** Verfahren nach Anspruch 12, **dadurch gekennzeichnet, dass** die Füllstoffe gleichzeitig mit dem Additiv eingeführt werden.

**14.** Verfahren nach Anspruch 12 oder 13, **dadurch gekennzeichnet, dass** die Füllstoffe Mehle von Steinen sind.

**15.** Verfahren nach irgendeinem der vorangehenden Ansprüche, **dadurch gekennzeichnet, dass** das verwendete Bitumen-Bindemittel ein Bitumen, ein Spezialbitumen, ein modifiziertes Bitumen, ein durch Polymere modifiziertes Bitumen oder deren Mischungen ist.

**16.** Mischung für den Bau, umfassend ein Bitumen-Bindemittel insbesondere eines Bitumen-Betons oder von Bitumengemischen, welches durch das Verfahren nach irgendeinem der vorangehenden Ansprüche erhältlich ist, **dadurch gekennzeichnet, dass** bei seinem Einsatz die Aerosol-Emissionen unterhalb von 0,5 mg/m$^3$, vorteilhaft unterhalb von 0,36 mg/m$^3$ liegen.

**17.** Verwendung eines Additivs in Granulatform, wie in irgendeinem der Ansprüche 1 bis 11 definiert, um die Temperatur der Mischung zu steuern, welche die Zuschlagsstoffe und das Bitumen-Bindemittel umfasst, damit die Mischung eine Masse bleibt, insbesondere um die Temperatur der Mischung ungefähr bei der am Ende des Schritts b) erzielten Umhüllungstemperatur aufrechtzuerhalten.

**18.** Verwendung eines Additivs in Granulatform, wie in irgendeinem der Ansprüche 1 bis 11 definiert, um die Handhabbarkeit einer Mischung für den Bau, welche ein Bitumen-Bindemittel insbesondere eines Bitumenbetons oder von Bitumengemischen umfasst, insbesondere unter schwierigen atmosphärischen Bedingungen des Einsatzes der Mischung für den Bau, insbesondere bei Umgebungstemperaturen zwischen 5 und 10 °C einschließlich, zu erhöhen.

**19.** Vorrichtung zur Durchführung des Verfahrens nach einem der Ansprüche 1 bis 15, umfassend einen Silo (74, 22), dessen Auslass (84) mit einer Wägevorrichtung (24) verbunden ist, die ihrerseits durch die schräge Fläche eines Fördermittels mit einer Mischvorrichtung (16, 34) verbunden ist, **dadurch gekennzeichnet, dass** ein Additiv in Granulatform, das ein hohes Desorptionsvermögen mit der Temperatur besitzt, wobei das Granulat mit Hilfe eines Bindemittels agglomerierte Feinteilchen des Additivs umfasst, wobei die feinen Partikel einen mittleren Durchmesser zwischen 2 μm und 4 μm einschließlich besitzen, in dem besagten Silo (74, 22) gelagert ist, der einen Träger mit einem Schwingungsmotor (82) besitzt, welcher es erlaubt, das gewünschte Fließverhalten des Additivs sicherzustellen, und die Mischvorrichtung (16, 34) zum Vermischen der Zuschlagstoffe, des Bitumen-Bindemittels, des Additivs und gegebenenfalls von Füllstoffen dient.

**20.** Vorrichtung nach Anspruch 19, **dadurch gekennzeichnet, dass** das Fördermittel mit der Vorrichtung zur Zufuhr von Füllstoffen zur Mischvorrichtung (16, 34) identisch ist.

**21.** Vorrichtung nach irgendeinem der Ansprüche 19 und 20, **dadurch gekennzeichnet, dass** das Fördermittel ein Druckluftförderer ist, der die in der Mischvorrichtung (16, 34) vorhandene Einspritzvorrichtung (58, 68) speist.

**22.** Vorrichtung nach irgendeinem der Ansprüche 19 bis 21, **dadurch gekennzeichnet, dass** der Silo als mobile oder ortsfeste Einheit konzipiert ist, wobei insbesondere der Silo derart bemessen ist, dass er auf einem Lastkraftwagen (76) mitgeführt werden kann.

**23.** Vorrichtung nach irgendeinem der Ansprüche 19 bis 22, **dadurch gekennzeichnet, dass** das Additiv mittels eines Zellenradverteilers (90) und einer stromabwärts vom Verteiler angeordneten Wägevorrichtung gefördert werden kann.

**24.** Vorrichtung nach irgendeinem der Ansprüche 19 bis 23, **dadurch gekennzeichnet, dass** eine Steuerwarte (98), eine Wägevorrichtung und ein Fördermittel (96) auf einem rollenden Fahrgestell (88) angeordnet sind, das auf den Silo (74) hin ausgerichtet werden kann.

**25.** Vorrichtung nach irgendeinem der Ansprüche 19 bis 24, **dadurch gekennzeichnet, dass** das Fördermittel (96) einen Umlaufverdichter (96) mit einem stromaufwärtigen Aufgabebehälter (94) umfasst.

FIG.1

FIG.2

74

76

## FIG.3

74

78

80

82

76

90

84

92  88

## FIG.4

74

92  90

96

## FIG.5

FIG.6

FIG.7

**FIG.8**

**FIG.9**

170°C sans zéolithe

140°C avec zéolithe

140°C sans zéolithe

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0048792 B1
- DE 4323256 A1
- EP 0048792 A
- DE 4323256